# EUROPÄISCHE PATENTSCHRIFT

(11) **EP 1 069 028 B1**
(45) Veröffentlichungstag und Bekanntmachung des Hinweises auf die Patenterteilung: **17.12.2003**
(21) Anmeldenummer: 00113042.6
(22) Anmeldetag: 23.06.2000
(51) Int. Cl.: B62D 25/04, B60R 13/07, F16L 11/12

(54) **Trägeranordnung mit einer Wasserablaufleitung für einen Fahrzeugaufbau**
Pillar structure with a water drain for a vehicle body
Elément porteur comprenant une conduite d'écoulement pour une carrosserie de véhicule

(30) Priorität: 14.07.1999 DE 19932800
(43) Veröffentlichungstag der Anmeldung: 17.01.2001
(73) Patentinhaber: Volkswagen Aktiengesellschaft, 38436 Wolfsburg (DE)
(72) Erfinder: Hass, Christian, 38477 Jembke (DE)

(56) Entgegenhaltungen:
- EP-A- 0 239 741
- EP-A- 0 299 262
- EP-A- 0 332 366
- EP-A- 0 896 908
- DE-A- 2 217 252
- DE-A- 4 210 589
- DE-A- 4 326 869

## Beschreibung

Die Erfindung betrifft eine Trägeranordnung gemäß dem Oberbegriff des Patentanspruchs 1.

In erster Linie ist dabei an eine A-Säule mit einer einem Schiebedach zugeordneten Wasserablaufleitung gedacht. Derartige Trägeranordnungen, also auch A-Säulen, bestehen aus einem geschlossenen Hohlprofil, das der Trägeranordnung die erforderliche Steifigkeit verleiht, und einer dem Profil zugeordneten und an diesem durch Clipse gehaltenen Verkleidung, die dem Fahrzeuginnenraum zugekehrt ist. Zur Unterbringung der Strömungsmittelleitung, also im bevorzugten Einsatzfall der Erfindung der Wasserablaufleitung für die Schiebedachanordnung, ist es bekannt, das Innere des Hohlprofils auszunutzen. Dies macht jedoch mehrere Schwierigkeiten. Zum einen ist es schwer, bei starken Fahrzeugerschütterungen Klappergeräusche durch Berührungen zwischen Innenseite des Hohlprofils und Strömungsmittelleitung zu unterbinden, und zum anderen kann es aus Gründen der Erhöhung der Steifigkeit sinnvoll sein, innerhalb des Hohlprofils Versteifungen unterzubringen und Durchtrittslöcher zu vermeiden. Daher kann es zweckmäßig sein, die besagte Leitung längs der Außenseite des Hohlprofils zu verlegen, wozu jedoch besondere Befestigungsmittel erforderlich sind.

Die DE 42 10 589 A1 beschreibt ein Kraftfahrzeug gemäß den Oberbegriff des Anspruchs 1 mit zumindest einem an der Fahrzeugunterseite angeordneten U-förmigen Tragholm, der an seiner Basis zur Bildung eines Freiraums eine rinnenartige Vertiefung aufweist, die ihrerseits zur Aufnahme von Leitungen dient. Den Leitungen sind örtlich Halter zugeordnet. Dieser rinnenartige Freiraum ist zum Schutz der Leitungen gegen Beschädigung und Verschmutzung durch eine in der Flucht der Basis des Tragholms verlaufende Abdeckung verschlossen, die mittels Schrauben am Tragholm gehalten ist. Die Schrauben durchsetzen Durchtrittslöcher in dem Halter. Dieser Stand der Technik gibt keine Hinweise auf Unterbringung und Festlegung einer Leitung in dem Fall, in dem die Trägeranordnung außer dem Hohlprofil eine Verkleidung für dieses enthält, die an dem Hohlprofil festgelegt ist.

Aus der DE 22 17 252 A ist eine Leitungsanordnung für die Verbindung zwischen einer Einspritzbrennkraftmaschine und einem Kraftstoffbehälter mit mehreren Leitungen bekannt, bei der sich zwischen zwei benachbarten Leitungen ein Steg erstreckt, der mit Durchtritten für Befestigungsmittel versehen ist. Die Frage der Festlegung der Leitungsanordnung an einem Träger, der zugleich mit einer ihn abdeckenden Verkleidung versehen ist, ist auch in dieser Schrift nicht behandelt.

Der Erfindung liegt die Aufgabe zugrunde, eine gattungsgemäße Trägeranordnung mit einem Hohlprofil und einer diesem zugeordneten Verkleidung zu schaffen, die keine zusätzlichen Mittel zur Festlegung der Strömungsmittelleitung erfordert und dennoch die Nachteile der Unterbringung derselben innerhalb des Hohlprofils vermeidet.

Die erfindungsgemäße Lösung dieser Aufgabe besteht in den kennzeichnenden Merkmalen des Hauptanspruchs, vorteilhafte Ausgestaltungen und Anwendungen der Erfindung beschreiben die Unteransprüche.

Die Erfindung nutzt also in vorteilhafter Weise die ohnehin zur Befestigung der Verkleidung am Hohlprofil erforderlichen Clipse oder Schrauben auch zur Arretierung der Strömungsmittelleitung aus, die dazu mit örtlichen Durchtritten versehen ist. Dazu ist die Leitung örtlich zweiflutig ausgebildet; zwischen den beiden Zweigen dieser zweiflutigen Leitung erstreckt sich ein Durchtritt für jeweils eine geringe Zahl von Clipsen oder Schrauben, vorzugsweise einen Clips. Im übrigen kann die Leitung einflutig gestaltet sein, so daß sich zusätzliche Verbindungen zwischen den beiden Strömungswegen der Leitung erübrigen.

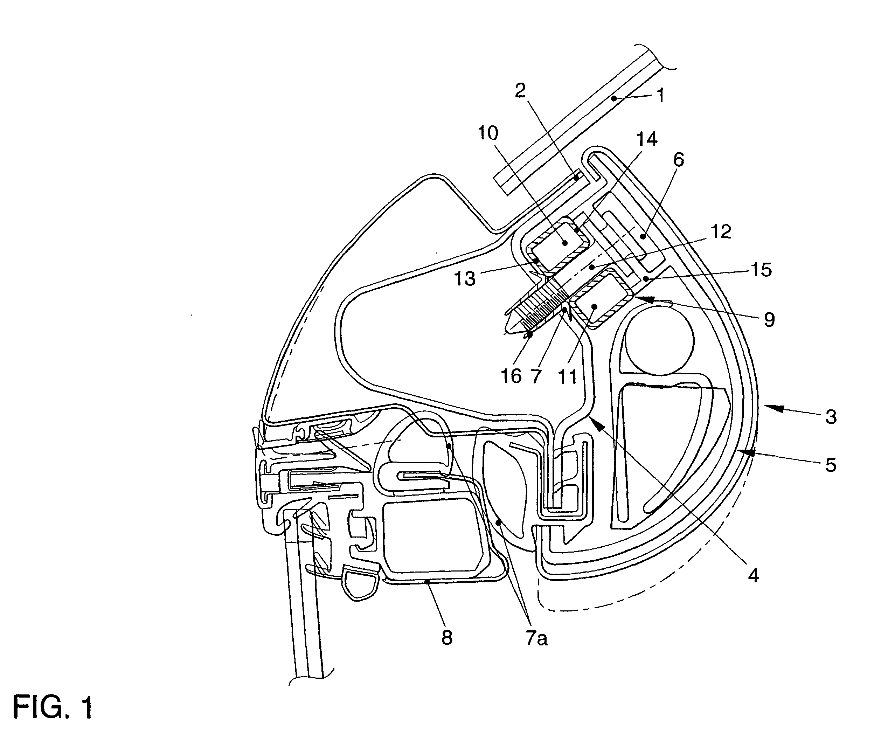

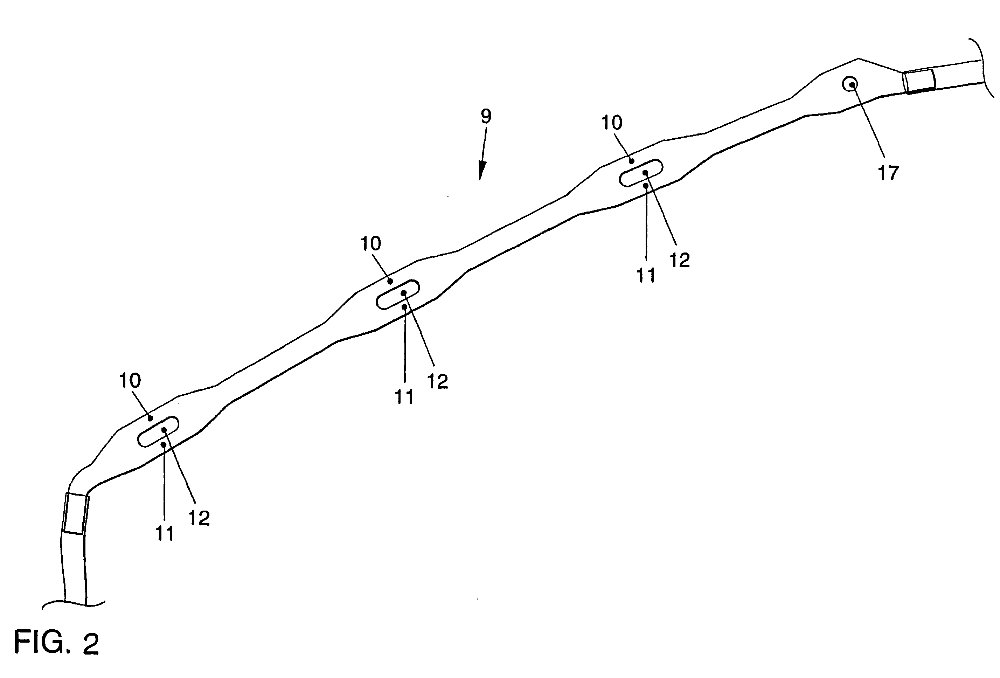

Ein entsprechendes Ausführungsbeispiel der Erfindung wird im folgenden anhand der Zeichnung erläutert, deren Figur 1 einen Horizontalschnitt durch einen oberen Bereich der A-Säule eines Kraftfahrzeugs wiedergibt, während Figur 2 eine Draufsicht auf eine örtlich zweiflutig gestaltete Leitung ist.

Betrachtet man zunächst Figur 1, so erkennt man bei 1 die Windschutzscheibe des hier angenommenen Kraftfahrzeugs, die mit üblichen, nicht dargestellten Dicht- und Befestigungsmitteln am Flansch 2 der allgemein mit 3 bezeichneten A-Säule festgelegt ist. Diese A-Säule enthält als wesentliche Bestandteile das Hohlprofil 4, das in diesem Ausführungsbeispiel aus zwei Blechprofilen durch Schweißen zusammengesetzt ist, und die gegebenenfalls mehrlagige Versteifung 5, die mittels Clipsen 6, die in jeweils eine Ausnehmung 7 des Hohlprofils 4 eingreifen, an diesem gehalten ist. Sowohl die Ausgestaltung des Hohlprofils 4 als auch diejenige der Verkleidung 5 können ebenso wie die Gestaltung des Clipses 6 im Rahmen der Erfindung beliebig sein; das gilt übrigens auch für die Ausgestaltung der Türdichtungen 7a, die der Stirnseite der Tür 8 zugeordnet sind.

Die A-Säule 3 dient zugleich zur Führung der Wasserablaufleitung 9, die einer nicht dargestellten, ebenfalls bekannten Schiebedachanordnung zugeordnet ist. Wie unmittelbar aus Figur 1 ersichtlich, ist die Wasserablaufleitung 9 im Bereich der Clipse 6 zweiflutig, nämlich mit den beiden Strömungszweigen 10 und 11, unter Bildung des Durchtritts 12 für den Clips 6 ausgebildet. Dieser dient, wie verständlicherweise weitere Clipse zur Halterung der Verkleidung 5, also zugleich zur klappersicheren Arretierung der Wasserablaufleitung 9 in raumsparender Lage.

Wie weiter aus Figur 1 ersichtlich, besitzt die Leitung 9 zumindest im Bereich der Clipse 6 einen etwa rechteckigen Querschnitt mit den beiden sich gegenüberliegenden Flächen 13 und 14, von denen die Fläche 13 zur Auflage auf der Außenfläche des Hohlprofils 4 dient, während die andere Fläche 14 zur Auflage des Stützprofils 15 der Verkleidung 5 vorgesehen ist, in dem der Clips 6 vormontiert ist.

Grundsätzlich wäre es verständlicherweise auch möglich, insbesondere die Fläche 13 so zu profilieren, daß ihr Verlauf demjenigen der Außenfläche des Hohlprofils 4 an dieser Stelle angepaßt ist.

Zur Abdichtung des Hohlprofils 4 im Bereich der Öffnung 7 ist in diese die Dichtung 16 eingesetzt.

Figur 2 läßt die Ausbildung der Wasserablaufleitung 9 über eine größere Länge erkennen. Man sieht mehrere langlochartige (zur Vermeidung von Toleranzproblemen) Durchtritte 12, gebildet durch zweiflutige Ausbildung der Leitung 9 mit den beiden Strömungszweigen 10 und 11. An ihren Enden kann die schlauchartige Leitung 9 zum dichten Ansetzen von Rohren oder anderen Schläuchen eingerichtet sein. 17 bedeutet einen kreisrunden Durchtritt für einen Clips, wodurch ein Bezugspunkt gebildet ist.

Derartige schlauchartige Leitungen können, wie an sich bekannt, im Saugblasverfahren aus Kunststoff, beispielsweise Polypropylen, hergestellt werden.

Mit der Erfindung ist demgemäß eine gattungsgemäße Trägeranordnung geschaffen, die ohne Verwendung zusätzlicher Befestigungsmittel die Festlegung einer Strömungsmittelleitung an einem Hohlprofil unterhalb einer Verkleidung ermöglicht.

## Patentansprüche

1. Trägeranordnung (3) für einen Fahrzeugaufbau mit einem steifen Hohlprofil (4), das zur Führung einer außenseitig verlaufenden Strömungsmittelleitung (9) dient und an dem eine Abdeckung mittels Befestigungsmitteln (6), insbesondere Clipsen, befestigt ist, denen leitungsseitig örtliche Durchtritte (12) zugeordnet sind und die die Leitung (9) zwischen Hohlprofil (4) und Abdeckung festlegen, **dadurch gekennzeichnet, daß** die Abdeckung eine dem Profil (4) zugeordnete Verkleidung (5) ist und die Durchtritte (12) durch örtlich zweiflutige Ausgestaltung (10, 11) der Leitung (9) gebildet sind.

2. Trägeranordnung nach Anspruch 1, **dadurch gekennzeichnet, daß** ein Teil der Durchtritte (12) langlochartig ausgebildet ist.

3. Trägeranordnung nach Anspruch 1 oder 2, **dadurch gekennzeichnet, daß** die Leitung (9) zumindest im Bereich der Durchtritte (12) sich gegenüberliegende Flächen (13, 14) aufweist, von denen eine (13) eine Auflage auf dem Hohlprofil (4) und die andere (14) eine Auflage eines Stützprofils (15) der Verkleidung (5) bildet.

4. Trägeranordnung nach Anspruch 3, **dadurch gekennzeichnet, daß** die Flächen (13, 14) im wesentlichen eben sind.

5. Trägeranordnung nach einem der Ansprüche 1 bis 4, **dadurch gekennzeichnet, daß** die Leitung (9) ein im Saugblasverfahren hergestellter Kunststoffschlauch ist.

6. Trägeranordnung nach einem der Ansprüche 1 bis 5, **dadurch gekennzeichnet, daß** die Trägeranordnung eine A-Säule (3) und die Strömungsmittelleitung eine einem Schiebedach zugeordnete Wasserablaufleitung (9) ist.

## Claims

1. Support arrangement (3) for a vehicle body, having a stiff hollow profile (4) which is used for guiding a flow medium line (9) running on the outside, and to which a covering is fastened by means of fastening means (6), in particular clips, which are assigned local passages (12) on the line side and which fix the line (9) between the hollow profile (4) and covering, **characterized in that** the covering is a panelling (5) which is assigned to the profile (4) and the passages (12) are formed by a conf igurat ion (10, 11) of the line (9) with a double flow in some places.

2. Support arrangement according to Claim 1, **characterized in that** some of the passages (12) are designed in the manner of slots.

3. Support arrangement according to Claim 1 or 2, **characterized in that** the line (9) has, at least in the region of the passages (12), surfaces (13, 14) which lie opposite one another and of which one (13) forms a support on the hollow profile (4) and the other (14) forms a support for a supporting profile (15) of the panelling (5).

4. Support arrangement according to Claim 3, **characterized in that** the surfaces (13, 14) are essentially planar.

5. Support arrangement according to one of Claims 1 to 4, **characterized in that** the line (9) is a plastic tube produced by a suction blow-moulding process.

6. Support arrangement according to one of Claims 1 to 5, **characterized in that** the support arrangement is an A-pillar (3) and the flow medium line is a water outlet line (9) assigned to a sliding roof.

## Revendications

1. Agencement de support (3) pour une carrosserie de véhicule, comprenant un profilé creux rigide (4) servant à guider une conduite pour fluides d'écoulement (9) s'étendant du côté extérieur et sur lequel un recouvrement est fixé par le biais de moyens de fixation (6), notamment des clips, auxquels sont associés, du côté de la conduite, des passages locaux (12) et qui fixent la conduite (9) entre le profilé creux (4) et le recouvrement, **caractérisé en ce que** le recouvrement est un habillage (5) associé au profilé (4) et les passages (12) sont formés par une configuration à double circulation locale (10, 11) de la conduite (9) .

2. Agencement de support selon la revendication 1, **caractérisé en ce qu'**une partie des passages (12) est réalisée en forme de trous oblongs.

3. Agencement de support selon la revendication 1 ou 2, **caractérisé en ce que** la conduite (9) présente au moins dans la région des passages (12) des faces en regard (13, 14), dont une (13) forme un appui sur le profilé creux (4) et l'autre (14) forme un appui d'un profilé de support (15) de l'habillage (5).

4. Agencement de support selon la revendication 3, **caractérisé en ce que** les faces (13, 14) sont essentiellement planes.

5. Agencement de support selon l'une quelconque des revendications 1 à 4, **caractérisé en ce que** la conduite (9) est un tuyau flexible en plastique fabriqué suivant un procédé d'aspiration et soufflage.

6. Agencement de support selon l'une quelconque des revendications 1 à 5, **caractérisé en ce que** l'agencement de support est une colonne A (3) et la conduite pour fluides d'écoulement est une conduite d'écoulement d'eau (9) associée à un toit ouvrant.
